# EUROPEAN PATENT APPLICATION

(11) **EP 4 790 502 A1**
(43) Date of publication of application: **12.08.2026**
(21) Application number: 25156733.5
(22) Date of filing: 10.02.2025
(51) Int. Cl.: G05B 23/02

(54) **PREDICTIVE MAINTENANCE FOR ROTATING EQUIPMENT**

(71) Applicant: ABB SCHWEIZ AG, 5400 Baden (CH)
(72) Inventor: Jannasch, Steven, 00380 Helsinki (FI); Aydin, Ugur, 00380 Helsinki (FI); Suszalski, Dominik, 30-404 Kraków (PL)
(74) Representative: Kolster Oy Ab

(57) **Abstract**

A recommendation indicating an action to be performed to avoid a failure in a rotating equipment, and when the action is be performed, is generated based on an estimated duration how long it will take until a fault evolves to a failure and at least one operating parameter of the rotating equipment. The duration may be estimated using predicted values obtained using a model trained for predicting evolve-ment of values of a first group of key performance indicators in an operating group the rotating equipment belongs to, the model outputting predicted values for the first group of the key performance indicators, the input to the model being measurement data obtained from the rotating equipment.

## Description

### TECHNICAL FIELD

The present invention relates to predictive maintenance for a rotating equipment.

### BACKGROUND ART

The evolvement of networking between computers and measurement devices, especially different sensors, capable of communicating without user involvement, has enabled different services, for example predictive maintenance. Predictive maintenance uses measured, or collected, time series data to predict future trend of the data for the purpose to schedule maintenance actions as late as possible but yet before a failure. This increases equipment availability whilst avoid unplanned production breaks. To accomplish this, an estimate of how long an equipment can be safely operated is needed. There are known systems and methods for predicting a remaining lifetime of a rotating equipment, for example using time series forecasting. However, there is always room for improving their accuracy.

### SUMMARY

According to an aspect, there is provided the subject matter of the independent claims. Embodiments are defined in the dependent claims.

According to an aspect there is provided a method comprising: obtaining at certain intervals measurement data measured from a rotating equipment; determining values for at least a first group of key performance indicators using at least a piece of said measurement data; inputting, at least when a first change in any of the values in the first group is detected based on measurement data obtained at time t, the first change being a predetermined change indicating a start of a fault in the rotating equipment, the piece of said measurement data at time t, and at least corresponding pieces of measurement data obtained N times preceding the time t, wherein N is a positive integer, to a model trained for predicting the evolvement of values of the first group of key performance indicators in an operating group the rotating equipment belongs to, the model outputting predicted values for the first group of the key performance indicators; estimating a duration how long it will take until the fault evolves to a failure based on the predicted values and thresholds predefined for the key performance indicators in the first group for the fault; generating, based on the duration and a value of at least one operating parameter of the rotating equipment, a recommendation indicating an action to be performed to avoid the failure, and when the action is to be performed; and outputting at least the recommendation via a user interface to an operator.

According to an aspect there is provided a method comprising: obtaining historical data comprising data measured on a plurality of rotating equipments in different uses; classifying the historical data to a plurality of operating groups; determining at least a first group of key performance indicators; training, per an operating group, using historical data of said operating group, a model for predicting evolvement of values of the first group of the key performance indicators; and storing the plurality of models trained with information on corresponding operating groups.

According to an aspect there is provided an apparatus comprising at least: means for obtaining at certain intervals measurement data measured from a rotating equipment; means for determining values for at least a first group of key performance indicators using at least a piece of said measurement data; means for inputting, at least when a first change in any of the values in the first group is detected based on measurement data obtained at time t, the first change being a predetermined change indicating a start of a fault in the rotating equipment, the piece of said measurement data at time t, and at least corresponding pieces of measurement data obtained N times preceding the time t, wherein N is a positive integer, to a model trained for predicting the evolvement of values of the first group of key performance indicators in an operating group the rotating equipment belongs to, the model outputting predicted values for the first group of the key performance indicators; estimating a duration how long it will take until the fault evolves to a failure based on the predicted values and thresholds predefined for the key performance indicators in the first group for the fault; generating, based on the duration and a value of at least one operating parameter of the rotating equipment, a recommendation indicating an action to be performed to avoid the failure, and when the action is to be performed; and means for outputting at least the recommendation via a user interface to an operator.

According to an aspect there is provided an apparatus comprising at least: means for obtaining historical data comprising data measured on a plurality of rotating equipments in different uses; means for classifying the historical data to a plurality of operating groups; means for determining at least a first group of key performance indicators; means for training, per an operating group, using historical data of said operating group, a model for predicting evolvement of values of the first group of the key performance indicators; and means for storing the plurality of models trained with information on corresponding operating groups.

According to an aspect there is provided a computer program comprising instructions which, when the program is executed by a computing device, cause the computing device to carry out at least: obtaining at certain intervals measurement data measured from a rotating equipment; determining values for at least a first group of key performance indicators using at least a piece of said measurement data; inputting, at least when a first change in any of the values in the first group is detected based on measurement data obtained at time t, the first change being a predetermined change indicating a start of a fault in the rotating equipment, the piece of said measurement data at time t, and at least corresponding pieces of measurement data obtained N times preceding the time t, wherein N is a positive integer, to a model trained for predicting the evolvement of values of the first group of key performance indicators in an operating group the rotating equipment belongs to, the model outputting predicted values for the first group of the key performance indicators; estimating a duration how long it will take until the fault evolves to a failure based on the predicted values and thresholds predefined for the key performance indicators in the first group for the fault; generating, based on the duration and a value of at least one operating parameter of the rotating equipment, a recommendation indicating an action to be performed to avoid the failure, and when the action is to be performed; and outputting at least the recommendation via a user interface to an operator.

According to an aspect there is provided a computer program comprising instructions which, when the program is executed by a computing device, cause the computing device to carry out at least: obtaining historical data comprising data measured on a plurality of rotating equipments in different uses; classifying the historical data to a plurality of operating groups; determining at least a first group of key performance indicators; training, per an operating group, using historical data of said operating group, a model for predicting evolvement of values of the first group of the key performance indicators; and storing the plurality of models trained with information on corresponding operating groups.

According to an aspect there is provided a computer readable medium comprising program instructions which, when the program is executed by a computing device, cause the computing device to carry out at least: obtaining at certain intervals measurement data measured from a rotating equipment; determining values for at least a first group of key performance indicators using at least a piece of said measurement data; inputting, at least when a first change in any of the values in the first group is detected based on measurement data obtained at time t, the first change being a predetermined change indicating a start of a fault in the rotating equipment, the piece of said measurement data at time t, and at least corresponding pieces of measurement data obtained N times preceding the time t, wherein N is a positive integer, to a model trained for predicting the evolvement of values of the first group of key performance indicators in an operating group the rotating equipment belongs to, the model outputting predicted values for the first group of the key performance indicators; estimating a duration how long it will take until the fault evolves to a failure based on the predicted values and thresholds predefined for the key performance indicators in the first group for the fault; generating, based on the duration and a value of at least one operating parameter of the rotating equipment, a recommendation indicating an action to be performed to avoid the failure, and when the action is to be performed; and outputting at least the recommendation via a user interface to an operator.

According to an aspect there is provided a computer readable medium comprising program instructions which, when the program is executed by a computing device, cause the computing device to carry out at least: obtaining historical data comprising data measured on a plurality of rotating equipments in different uses; classifying the historical data to a plurality of operating groups; determining at least a first group of key performance indicators; training, per an operating group, using historical data of said operating group, a model for predicting evolvement of values of the first group of the key performance indicators; and storing the plurality of models trained with information on corresponding operating groups.

### BRIEF DESCRIPTION OF THE DRAWINGS

In the following, exemplary embodiments will be described in greater detail with reference to accompanying drawings, in which
Figure 1 shows a simplified architecture of an exemplary system;
Figure 2 is a plot illustrating dependency between speed and vibration;
Figure 3 is a flow chart illustrating an example functionality;
Figure 4 is a flow chart illustrating an example functionality;
Figure 5 shows an example of a prediction;
Figure 6 shows another example of a prediction;
Figure 7 shows a further example of a prediction;
Figure 8 schematically shows an example of information flow and models to be trained;
Figure 9 is a flow chart illustrating an example functionality and
Figure 10 is a schematic block diagram.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments/examples to consist of only those features that have been mentioned and such embodiments may contain also features/structures that have not been specifically mentioned.

The present invention is applicable to any system or apparatus that is configured or configurable to apply, using time series data, fault prediction per a rotating equipment (rotating machine). Different embodiments and examples are described below using single units, models, equipments (devices) and memory (data storage), without restricting the embodiments/examples to such a solution. Concepts called cloud computing and/or virtualization may be used. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In cloud computing network devices, computing devices and/or storage devices provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment.

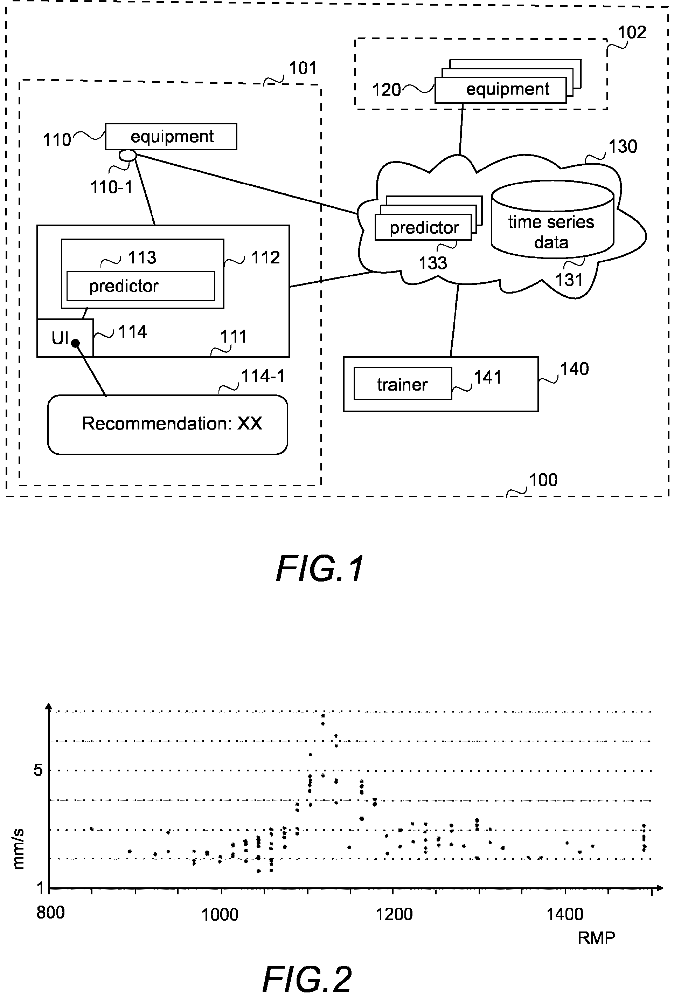

A general exemplary architecture of a system is illustrated in Figure 1. Figure 1 is a simplified system architecture only showing some devices, apparatuses and functional entities, all being logical units whose implementation and/or number may differ from what is shown. The connections shown in Figure 1 are logical connections; the actual physical connections may be different. It is apparent to a person skilled in the art that the system comprises any number of shown elements, other equipment, other functions and structures that are not illustrated. They, as well as the protocols used, are well known by persons skilled in the art and are irrelevant to the actual invention. Therefore, they need not be discussed in more detail here.

In the illustrated example of Figure 1, a system 100 comprises a plurality of industrial sites 101, 102 comprising rotating equipments 110, 120, a data storage 130, and a training platform 140.

For the clarity of description, in the example of Figure 1, one of the industrial sites is described in more detail, using one rotating equipment as an example of one or more rotating equipments an industrial site may comprise. In other words, in the illustrated example of Figure 1, the industrial site 101 comprises a rotating equipment 110, and one or more apparatuses 111 (only one illustrated in Figure 1) configured for condition monitoring.

A rotating equipment 110, 120 may be a device or a machine that includes a motor, a shaft and a bearing, i.e. an equipment that has a rotatable component and its support structure. It should be appreciated that herein the term "rotating equipment" covers also electromechanical devices that are devices converting electrical energy to mechanical energy. For example, the electromechanical device may be an electric pump, an electric fan, a drivetrain, an electric motor, a generator, a compressor, a turbine, a centrifuge, a gearbox, a blower, or a mixer, to name a few examples.

One or more sensors 110-1 are attached to the rotating equipment 110 to collect, or measure, measurement data from the rotating equipment. Further, there may be one or more sensors collecting measurement data, for example ambient temperature, from the surrounding environment of the rotating equipment. A sensor 110-1 may be a vibration sensor, an accelerometer, a magnetometer, a thermometer, a velocimeter, or frequency meter, for example. However, any other kind of sensors may be used. The sensors(s) 110-1 may be arranged to communicate with an online condition monitoring system, for example with the apparatus 111. Further, the sensor and/or the online condition monitoring system may be arranged to store measurement data locally and/or to a shared data storage. The sensors, or some of them, may be smart sensors that are configured to preprocess measurement data before they transmit the measurement data to the data storage 130 and/or to the apparatus 111 configured for condition monitoring. Data may be collected multiple times during a day, and a sensor 110-1 may collect a plurality of values during a measurement occurrence. Data collected during a measurement occurrence by a plurality of sensors may be stored as a data set and it may comprise a plurality of values per a sensor. For example, a data set may comprise 8192 values measured in quick succession at 1.6 kHz by an accelerometer and corresponding amount of values measured simultaneously in a similar manner by a magnetometer. Further, one or more of the sensors may collect data relating to operating parameters of the rotating equipment. Data relating to operating parameters may include values for one or more of the following: speed range, radial load, housing ambient temperature, housing ambient air velocity, current of the motor, running time between start and stop of the rotating equipment, etc. It should be appreciated that the above is not an exhaustive list of operating parameters. Further, it should be appreciated that operating parameters may be called operation parameters as well.

The apparatus 111 for condition monitoring comprises one or more user interfaces 114 for user interaction, and one or more monitoring tools 112 comprising one or more predictor units 113, which may cause that one or more recommendations 114-1 are displayed on the user interface 114, as will be described in more detail below. The apparatus 111 may locate on the site, for example in a control room, or an operator room, or in a remote site, or be distributed to different sites. A remote site may be, for example, a service center provided by an enterprise manufacturing different industrial devices, including the rotating equipment 110, and rotating equipments 120 in other industrial sites 102.

A monitoring tool 112 may be a combination of one or more analytic tools (not shown in Figure 1) and one or more predictors 113, or predictor units, to generate recommendations, as will be described in more detail below. An analytic tool may be based on data mining, self-learning artificial intelligence, mathematical models of an industrial process used, etc. It is obvious for one skilled in the art that any known or future analytic tool may be used. A predictor 113 is a trained machine learning model, whose training and functionality will be described in more detail below. Shortly described, the monitoring tool 112 may comprise an analytic tool configured, for example, to identify one or more changes indicative of a developing fault in the rotating equipment 110 based on measurement data collected on the rotating equipment, and the predictor 113 trained to predict (forecast) values for key performance indicators, the monitoring tool being configured to determine when one or more key performance indicators reach a level indicating a fault and to generate a recommendation 114-1. A more detailed internal structure of the monitoring tool is not relevant for the invention and therefore the internal structure is not described in more detail here. Further, the predictor 113 may be implemented as an integral part of the analytic tool, and vice versa.

Predicting values to one or more groups of key performance indicators, is simpler than predicting values based on which values for key performance indicators would be calculated. Further, predicted values for a group of key performance indicators provide accurate enough predictions, since values of the specific set of key performance indicators indicate a condition of the rotating equipment accurately enough, whereas a small mistake in a predicted values for measurement data, based on which values of the key performance indicators are calculated, may result in completely different values of the key performance indicators.

The data storage 130, depicting one or more data storages, may be any kind of conventional or future data repository, including distributed and centralized storing of data, managed by any suitable management system. An example of distributed storing includes a cloud-based storage, as illustrated in Figure 1, in a cloud environment (which may be a public cloud, a community cloud, a private cloud, or a hybrid cloud, for example). Cloud storage services may be accessed through a co-located cloud computer service, a web service application programming interface (API) or by applications that utilize API, such as cloud desktop storage, a cloud storage gateway or Web-based content management systems. In other words, a data storage 130 may be a computing equipment, equipped with one or more memories, or a sub-system, or an online archiving system, the sub-system or the system comprising computing devices that are configured to appear as one logical online archive (historian) for equipments (devices) that store data thereto and/or retrieve data therefrom. However, the implementation of the data storage 130, the manner how data is stored, retrieved and updated, i.e. details how the data storage is interfaced, and the location where the data is stored are irrelevant to the invention. It is obvious for one skilled in the art that any known or future solution may be used.

In the illustrated example of Figure 1, the data storage 130 comprises an archive (historian) 131 storing as time series data measurement data and data on operating parameters collected on a plurality of rotating equipments on a plurality of industrial sites. Different examples of the data collected are described above. The time series data may comprise information on possible faults detected.

Further, in the illustrated example of Figure 1, the data storage 130 comprises a plurality of predictors 133, or predictor units. A predictor may be trained to predict values for a specific group (set) of key performance indicators for a rotating equipment belonging to a specific operating group. Hence, there may be a plurality of predictors for a specific operating group, and since there are more than one operating group, for a plurality of operating groups. Further, the predictors may be rotating equipment type -specific. The operating groups have different speed and torque characteristics.

Both speed and torque influence the key performance indicators, for example due to resonance and energy available. As can be seen from Figure 2, there is a dependency (correlation) between vibration (mm/s) and speed (RPM), but the dependency is not a linear dependency. The results shown in Figure 2 support that using speed and torque to form operating groups increases accuracy compared to a situation in which no such grouping is performed. Hence, a speed and a torque of a rotating equipment define the operating group of the rotating equipment amongst the plurality of the operating groups. An operating group may be called an operation group as well. Depending on an implementation, the operating group of the rotating equipment may be preset, for example based on the intended speed and torque the rotating equipment is to be run, or the operating group may be determined for example, at certain intervals, based on measured speed and torque, for example using mean or average values. In the examples below, it is assumed, for the sake of clarity of description, that the preset operating group is used.

The training platform 140, or corresponding apparatus or equipment, comprises one or more trainer units 141 configured to create/update the predictors, i.e. a set of trained models, using the time series data in the archive, as will be described in more detail below. It should be appreciated that the trainer unit 141 may be an online equipment or an offline equipment. Further, in an implementation, there may be site -specific trainer units, configured to retrain predictor units using measurement data collected on said site.

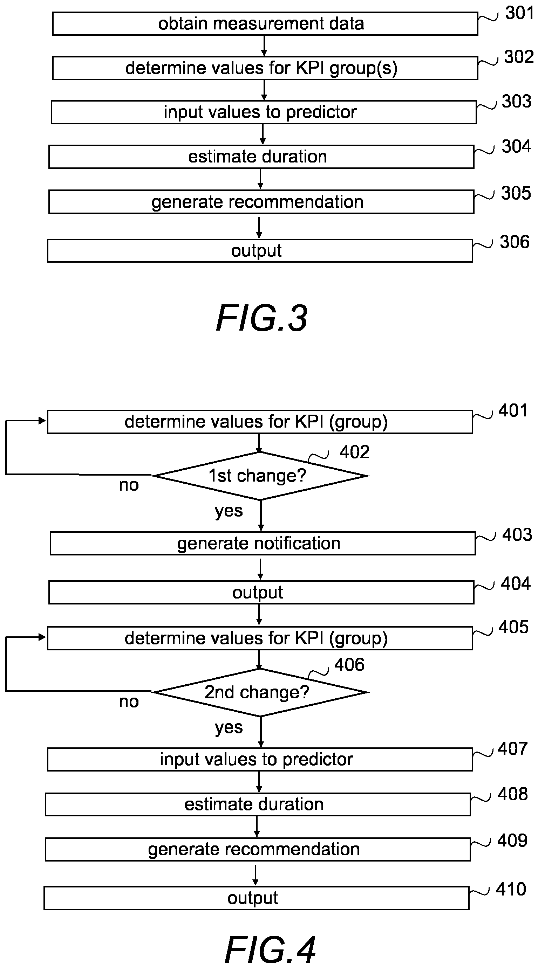

Figure 3 illustrates an example functionality of an apparatus comprising a monitoring tool monitoring, for the sake of clarity of description, one rotating equipment. It should be appreciated that corresponding processes may run in parallel, for example a process per a rotating equipment to be monitored and/or a process per a group of key performance indicators.

Referring to Figure 3, at certain intervals measurement data measured from the electromechanical device is obtained (block 301). Different examples of measurement data are described above.

Then values for at least a first group of key performance indicators are determined (block 302) using at least a piece of said measurement data obtained. There may be one group of key performance indicators or a plurality of groups of key performance indicators. For example, there may be a group of key performance indicators per a fault, i.e. every fault may have its own group of key performance indicators. In other words, there may be a plurality of groups of key performance indicators for a plurality of faults, respectively. Further, a key performance indicator may belong to two or more groups of key performance indicators, resulting that groups may have overlapping key performance indicators. For example, a fault X may cause that values of key performance indicators A, B and C increase, and a fault Y may cause that values of key performance indicators B, D and E increase. Hence, there may be a group of key performance indicators A, B and C for the fault X, and a group of key performance indicators B, D, E for the fault Y. Naturally, a key performance indicator may belong to only one group of key performance indicators, and there may be a group of key performance indicators comprising only one key performance indicator, which may or may not belong to any other group. It should be appreciated that a fault may be a fault in a critical component of the rotating equipment, e.g. a bearing fault or a rotor bar fault, and predicting key performance indicators reflecting degradation of the specific component facilitates estimation of when maintenance should be performed to such a critical component, and hence helps to schedule maintenance actions and avoid unplanned operation breaks of the rotating equipment. It should be noted that the bearing fault and the rotor bar fault are non-limiting examples of critical component faults.

A non-limiting list of examples of key performance indicators include relevant harmonics of vibration, e.g. harmonics of the rotating speed and harmonics of the supply frequency, which can be obtained from the current or the magnetic flux density, a bearing condition index, a misalignment index, an unbalance index, a looseness index, a vibration root mean square, a vibration peak-to-peak, a bearing index and a bearing fault index. For example, a bearing index value may be calculated based on vibration measurement data, and its value increases as the bearing starts to get more damaged. Even though in most cases an increasing value of a key performance indicator indicates an evolving fault, a decreasing value of a key performance indicator may indicate an evolving fault. Further examples are described with Figure 4.

Depending on an implementation, a piece of time series data may be input (block 303) at certain intervals, for example once a day or once a week or every second time, or every time, when values are determined (computed) for the key performance indicators in the one or more groups, and/or at least when a first change is detected, to a corresponding predictor. Still a further possibility includes to input values in the measurement data to the corresponding predictor every time the measurement data is obtained, without separately determining values for the key performance indicators. The corresponding predictor means a predictor trained for predicting evolvement of values of the key performance indicators in said group and in an operating group the rotating equipment belongs to. The first change is a predetermined change in any of values of key performance indicators in a group, which change indicates a start of a fault in the rotating equipment. The predetermined change may be detected based on measurement data obtained at time t, which may represent the latest measurement data obtained. The piece of time series data input to the predictor comprises the piece of said measurement data at time t, and at least corresponding pieces of measurement data obtained N times preceding the time t, wherein N is a positive integer. The predictor outputs predicted values for said group of the key performance indicators. The predictor may be configured to output a fixed number of future predicted values, e.g. 4 values, one per day, or the predictor may be configured to output a flexible number of predicted values, for example up to the predicted values reach a preset value, e.g. a threshold, for example, the accuracy of predictions increasing the shorter the time between the prediction time and the time a value reaches the preset value is.

A duration how long it will take until the fault evolves to a failure is estimated (block 304) based on the predicted values for said group of the key performance indicators and thresholds predefined for the key performance indicators in said group. For example, if there are three key performance indicators in a group and a fault is "rotor bar broken", there are three predefined thresholds, one per a key performance indicator.

Based on the duration (estimated duration) and a value of at least one operating parameter of the rotating equipment a recommendation is generated (block 305). In other words, values of one or more operating parameters may be used when the recommendation is generated. The recommendation indicates an action to be performed to avoid the failure, and when the action is to be performed. For example, one or more operating parameters, or more precisely corresponding one or more values, may be used to determine, or estimate, when the action is to be used, the action may be predetermined for the group of key performance indicators and/or for the fault, for example in implementations in which every fault, or more precisely, every fault that has been defined to be a predictable fault, has its own group of key performance indicators. A non-limiting list of operating parameters that may be used include a number of starts of the rotating equipment within a given time period, a number of stops of the rotating equipment within a given time period, how frequently the rotating equipment is started, how many hours the rotating equipment operates, on average, per day/weekday. The value of the operating parameter may be based on a large number of past measurements, e.g. hourly measurements.

The thus generated recommendation is output (block 306) via a user interface to an operator. Also other information, like key performance indicator values computed on measurement data, and/or their predictions may be output to the operator. Receiving the recommendations helps to schedule maintenance.

Figure 4 illustrates another example functionality of an apparatus comprising a monitoring tool monitoring, for the sake of clarity of description, one rotating equipment. It should be appreciated that corresponding processes may run in parallel, for example a process per a rotating equipment to be monitored and/or a process per a group of key performance indicators. Further, implementation alternatives described with Figure 3 may be applied with the example of Figure 4 as well, but they are not repeated herein for the clarity of description.

In the illustrated example of Figure 4, it is assumed, for the clarity of description, that a group of key performance indicators comprise one key performance indicator. Further, in the example of Figure 4 it is assumed that a direction of value change of the key performance indicator reverses at some time. For example, the key performance indicator may be a bearing fatigue index, or early shock pulse detection index, that is for detecting presence of shock pulses in the bearings. An initial rise in the value of the bearing fatigue index indicates than an incipient bearing fault begins to develop, but as the bearing fault progresses and a damage increases, after some time the value of the bearing fatigue index start to decrease, indicating that the bearing fault is starting to progress to the next stage. It should be appreciated that in real-life implementations, a group of key performance indicators for a bearing fault comprises also other indicators for detecting presence of other causes than shock pulses, the other causes resulting for a bearing fault, e.g. bearing index, whose value increases as the bearing fault increases.

Further, in the example of Figure 4, it is assumed even though not illustrated that measurement data and operating data is obtained. For example, once per hour a smart sensor may transmit to the apparatus an overall vibration, bearing condition, speed, supply frequency, 1 x speed harmonic amplitude, and 2x speed harmonic amplitude collected on the rotating equipment.

Referring to Figure 4, when measurement data is obtained, value for the key performance indicator (or values for key performance indicators per a group) are determined (block 401) as long as a first change is not detected (block 402: no). When the first change is detected (block 402: yes), for example a value of the key performance indicator reaches, e.g. exceeds in the example, a first threshold (a predetermined threshold), a notification indicating a failure start and when to check the rotating equipment is generated (block 403) and the notification is output via the user interface to the operator. For example, in March 2025 a notification "a bearing fault with a recommendation to prepare to change the bearing within the next six months" may be generated and output.

In the illustrated example, determining (block 405), when measurement data is obtained, a value for the key performance indicator (or values for key performance indicators per a group) is continued as long as a second change is not detected (block 406: no). The second change may be that the value change of the key performance indicator reverses, in the example starts to decrease, or reaches again, in the example goes below, the first threshold, or another threshold predetermined for that purpose.

At least when the second change is detected ( block 406: yes), time series data is input to the predictor, as described above with block 303, the predictor outputting predicted values, or a predicted value, for the key performance indicator. Based on the predictor output, a duration how long it will take until the fault evolves to a failure is estimated (block 408). Based on the duration (estimated duration) and a value of at least one operating parameter of the rotating equipment a recommendation is generated (block 409). In an implementation, a recommendation is generated only if the estimated duration is shorter than remaining duration indicated in the notification. The generated recommendation is then output (block 410) via a user interface to an operator. For example, assuming that the key performance indicator causing the notification being output in March 2025, decreases below a second threshold on July 2025 (4 months later), i.e. a second change is detected, a notification indicating that the bearing damage will advance to the next stage in two weeks may be generated and output. Assuming that the remaining useful lifetime is estimated, for example, to be 100 hours (1 % lifetime left, lifetime 10 000 hours) and assuming that the rotating equipment is running 12 hours per day, a recommendation to change the bearing within 8 working days is generated and output. In other words, the original notification indicated to change the bearing at the latest in September 2025, but based on estimation determined using the predictor output it is recommended to change the bearing earlier, or at least the schedule indicated is updated. Hence, the operator's skills to interpret measurement data, or directly calculated values for key performance indicators, is not decisive in determining the optimal time to change the bearings. Also other information, like key performance indicator values computed on measurement data, and/or their predictions may be output to the operator

It should be appreciated that in case none of the values output by the predictor reach a corresponding threshold defined for an immediate failure, block 407 may be repeated, i.e. measurement result obtained are input to the predictor, until at least one of the values reaches said threshold.

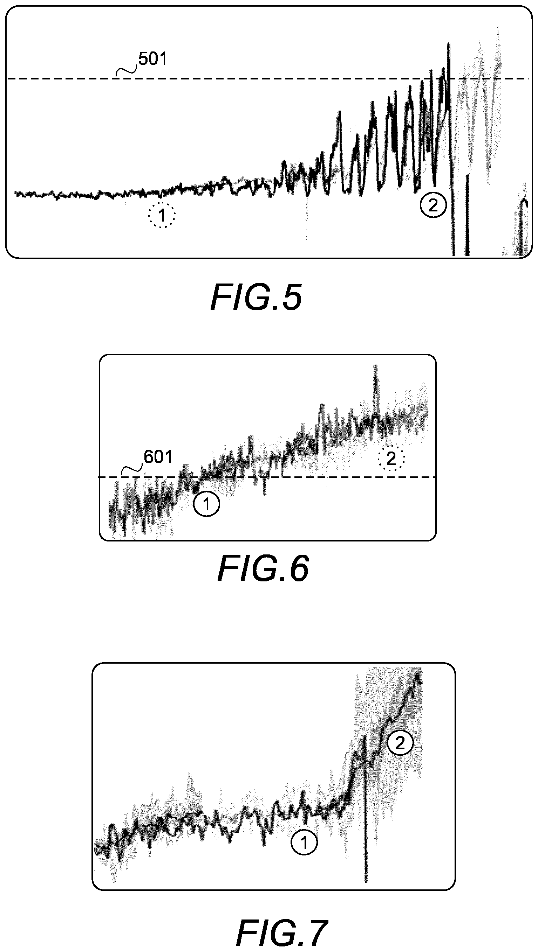

Figures 5 to 7 illustrate different predictions, Figure 5 for a key performance indicator "overall vibration", having a warning threshold 501, Figure 6 for a key performance indicator "misalignment" having a misalignment threshold 601, and Figure 7 for a key performance indicator "rotor bar index". Circled numbers 1 and 2 indicate a point in time. A further example is described, using Figure 5 and Figure 6, for a group of key performance indicators comprising "overall vibration" and "misalignment".

Referring to Figure 5, when the value of the "overall vibration", calculated using measurement data, reaches the warning threshold at point 2, time series data is input to a predictor, and based on the predictor output, a recommendation "significant bearing vibration, investigate with low priority" may be generated and displayed to the operator.

Referring to Figure 6, when the value of the "misalignment", calculated using measurement data, reaches the misalignment threshold at point 1, time series data is input to a predictor, and based on the predictor output, a recommendation "misalignment detected, check alignment during the next scheduled maintenance" may be generated and displayed to the operator.

When the group of key performance indicators comprises "overall vibration" and "misalignment", following may happen: when the value of the "misalignment", calculated using measurement data, reaches the misalignment threshold at point 1, time series data is input to a predictor, the predictor then predicts that a value of the "overall vibration" reaches the warning threshold at point 2, and estimates that this combination of predicted level of values of the key performance indicators can lead to a failure in 1-2 months, and generates a recommendation "check the alignment during the next four weeks".

In case measurement data is input all the time, or once a day, to the predictor, before point 2, a notification "vibration will cross the warning threshold in one week", for example, may be generated. Correspondingly, before point 1, a notification "misalignment will cross the misalignment threshold in one week", may be generated and displayed to the operator.

Referring to Figure 7, when a first change indicating a failure is detected in the "rotor bar index", at point 1, time series data is input to a predictor, the prediction is that at point 2 there is a likely a broken rotor bar, an operating parameter "number of starts per day" is used when estimating the duration, and a recommendation is generated and displayed. For example, if the number of the starts of the rotating equipment is one per day, the recommendation may be "investigate the motor bar during next scheduled maintenance to avoid broken rotor bar", whereas if the number of the starts of the rotating equipment is 50 per day, the recommendation may be "stop the motor immediately", or have a little bit more information, such as " stop the motor immediately to avoid possible collateral damage caused by a sudden motor failure due to a broken rotor bar".

As can be seen, for example, from the example of Figure 7, taking into account operating parameter reflecting that starting a motor causes a large current in the rotor, possibly exacerbating the fault quicker, better recommendations can be generated, and the operator does not have to be aware of the number of starts and how it may affect.

It should be appreciated there are numerous other situations how the described way to predict key performance indicators by taking into account an operating group and one or more operating parameters can be used to generate recommendations, and the above examples are just illustrative situations. The basic idea is to arrive to a recommendation of how quickly a corrective action is needed, possibly indicating which fault is present, based on predicted (forecasted) values of relevant key performance indicators, and an operating profile, i.e. an operating group and one or more operating parameters, of a rotating equipment.

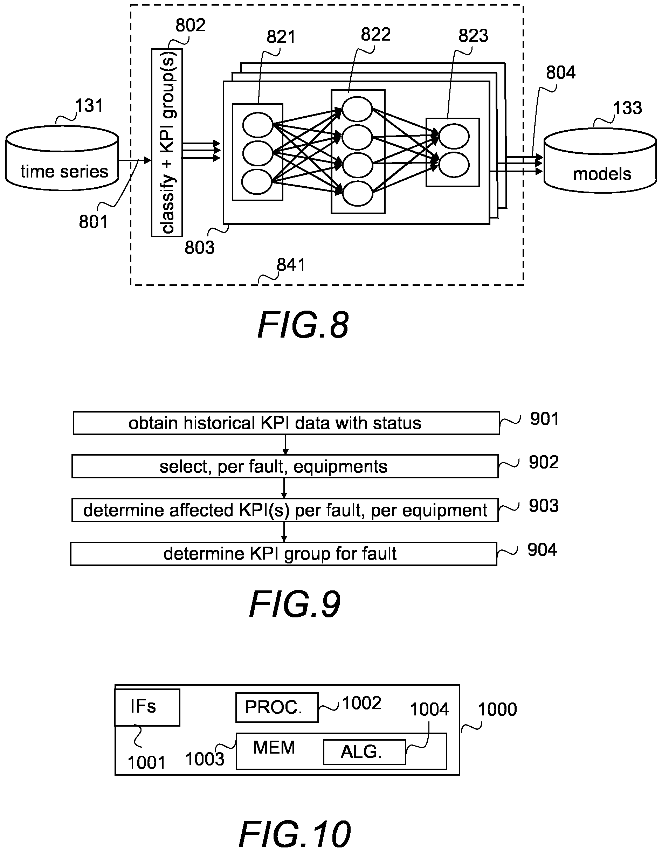

The example in Figure 8 describes basic principles used to create, train and retrain, when need arises, the predictor(s), without restricting solutions to the specific example. In the example of Figure 8 it is assumed that there are enough historical event data for training, and if supervised learning is used, enough data which can be split to be used as training data and validation data, or test data, to create/update the trained model. For example, values obtained before time A may be used as inputs, and the validation data may comprise key performance indicator values calculated based on values obtained after time A. In other words, Figure 8 shows an example of an information flow relating to training machine learning based models, i.e. predictors, for a plurality of operating groups. More precisely, it describes an example of how a trainer unit 841, or an apparatus comprising the trainer unit, operates to train one or more trainable algorithms for the predictor units, or to retrain earlier custom models or models based on a foundational model trained to predict values. A foundational model is a model trained on a vast dataset, and is, thus, able to output a reasonable prediction (forecast) for a previously unseen dataset, such as the measurement data originating from a rotating machine. Further, there exists a multitude of predictive models, or trainable algorithms, to forecast (predict) data based on past time series observations. A non-limiting list of such algorithms includes univariate and multivariate autoregressive integrated moving average models (ARIMA/VARIMA), recurrent neural network (RNN) based models, such as DeepAR and long short-term memory (LSTM) networks, the Prophet model, vector autoregression (VAR) models, transformer-based models, like the Informer model, which comprises an encoder and a decoder and utilizes ProbSparse self-attention, and models based on neural basis expansion analysis for interpretable time series forecasting. Additionally, hybrid models that combine different kind of models are also prevalent. Other notable models include Exponential Smoothing State Space Model (ETS), Seasonal Decomposition of Time Series (STL), Gaussian Process Regression (GPR), Convolutional Neural Networks (CNN) for Time Series, Temporal Convolutional Networks (TCN), N-BEATS (Neural Basis Expansion Analysis), Graph Neural Networks (GNN) for Time Series, and XGBoost and Random Forests for Time Series.

Referring to Figure 8, acquiring 801 a plurality of measurement data in the time series from the historian 131 is performed. In other words, historical data comprising data measured on a plurality of rotating equipments in different uses is obtained. The acquiring (obtaining) may include preprocessing, e.g. in a similar way as a smart sensor is preprocessing measurement data, measurement data acquired, or some pieces of the measurement data acquired if the measurement data comprises both data obtained using smart sensors and non-smart sensors.

Then one or more groups of key performance indicators are determined (block 802), or predetermined group(s) of key performance indicators are obtained, or the group definitions may be received as user input. For example, the training may be performed for one group of key performance indicators, or to a plurality of the key performance indicators. Further, the acquired data is classified (block 802), or split, to a plurality of the operating groups, using for example measured speed and a torque associated with measurement data to determine the operating group for the data (operating group of a rotating equipment on which the data is collected).

Then, per an operating group, and a group of key performance indicators, the measurement data is input to a model 803 to be trained or retrained for predicting evolvement of values of the group of the key performance indicators. The model comprises an input layer 821, one or more hidden layers 822 (only one illustrated for the sake of clarity) and an output layer 823, the layers having nodes with weights that may be adjusted during the training. When a foundational model is finetuned, i.e. retrained, it may be that only some of the weights are adjusted. The hidden layers may be predicting layers. For example, in an informer based model, the hidden layers may comprise the encoder and the decoder, and the output layer may be a fully connected layer outputting the predictions for the group(s) of key performance indicators. The training may be performed in an iterative manner until the model fulfils accuracy criteria. The accuracy criteria may be that outputted estimated predictions of conditions should correspond to the predictions of conditions obtained from the remote monitoring analysis.

When the training ends, the plurality of trained models are stored (804) with information on corresponding operating groups, and possibly with information indicating the group of key performance indicators, to the data storage 133, to be downloaded to predictor unit(s) or monitoring tools, for example.

Depending on an implementation, once created trained model may be retrained/updated periodically, in response to an explicit command, or continuously, using the principle disclosed above. Furthermore, in some implementations, the models may be retrained site-specifically, or even rotation equipment -specifically, for example by a trainer unit location on the site, thereby enabling finetuning predictors on existing conditions and failure cases, e.g. on the site.

The key performance indicators belonging to a group for a specific fault may be predetermined using historical knowledge/human knowledge. However, when there is enough data on rotating equipments that have encountered at least one fault, statistical analysis may be applied to determine key performance indicators for a fault. Figure 9 illustrates a functionality of an apparatus, that may the apparatus configured to train the predictors, or any other apparatus, configurable to determine key performance indicators belonging to a group of key performance indicators for a fault. In the example it is assumed that every fault has its own group of key performance indicators.

Referring to Figure 9, historical key performance indicator data associated with status data indicating corresponding condition of a corresponding rotating equipment is obtained (block 901) on a plurality of rotating equipments that have encountered at least one fault. The obtaining may be performed by determining, based on measurement data stored to historian, key performance indicators. Then, per a fault to which a group of key performance indicators is to be determined, rotating equipments that have encountered the fault are selected (902) from the obtained data. If there are rotating equipments that have encountered different faults, they will be selected more than once. Once the rotating equipments have been selected, one or more affected key performance indicators are determined (block 903) per a fault and per a rotating equipment selected for said fault. An affected key performance indicator is a key performance indicator whose values change when the condition of the rotating equipment changes from healthy to faulty. Then, per a fault, statistical analysis is applied to affected key performance indicators to determine a group of key performance indicators for said fault. A non-limiting list of statistical analysis that may be applied include correlation analysis, XGBoost feature importance score, random forest feature importance score, recursive feature elimination, variance thresholding, and chi-square test. The thus determined groups of key performance indicators may be stored, a group of key performance indicators for a fault. In other words, a group of key performance indicator determined for a fault may be associated with a corresponding fault when it is stored.

In other words, assuming that there is one fault, rotating equipments that have encountered the fault are selected, or determined. Then, per a rotating equipment selected, one or more affected key performance indicators are determined. When the affected key performance indicators are determined to each selected rotating equipment, the statistical analysis is applied to them, and the thus determined group of key performance indicators are stored for said fault.

The process of Figure 9 may be performed per an operating group, if there is enough data available for the operating group.

As can be seen from the above examples, solutions providing, thanks to the operating group level predictors, more accurate predictions, and hence recommendations indicating actions and when the actions are to be performed to avoid a failure are provided.

The blocks and related functions described above in Figures 1 to 9 are in no absolute chronological order, and some of the blocks may be performed simultaneously or in an order differing from the given one. Other functions can also be executed between the blocks or within the blocks. Some of the blocks or part of the blocks can also be left out or replaced by a corresponding block or part of the block.

Figure 10 is a simplified block diagram illustrating some units for an apparatus (device, equipment) 1000 configured to perform at least some functionality described above for providing the recommendations, for example by means of Figures 1 to 7 and any combination thereof, and/or configured to perform at least some functionality described above for (re)training the predictors, for example by means of Figure 1 and Figure 8, and/or configured to perform at least some functionality described above for determining groups of key performance indicators, for example by means of Figure 1 and Figure 9.

In an embodiment, the apparatus comprises at least one processor; and at least one memory including computer program code, the at least one memory and computer program code configured to, with the at least one processor, cause the apparatus at least to: obtain at certain intervals measurement data measured from a rotating equipment; determine values for at least a first group of key performance indicators using at least a piece of said measurement data; input, at least when a first change in any of the values in the first group is detected based on measurement data obtained at time t, the first change being a predetermined change indicating a start of a fault in the rotating equipment, the piece of said measurement data at time t, and at least corresponding pieces of measurement data obtained N times preceding the time t, wherein N is a positive integer, to a model trained for predicting the evolvement of values of the first group of key performance indicators in an operating group the rotating equipment belongs to, the model outputting predicted values for the first group of the key performance indicators; estimate a duration how long it will take until the fault evolves to a failure based on the predicted values and thresholds predefined for the key performance indicators in the first group for the fault; generate, based on the duration and a value of at least one operating parameter of the rotating equipment, a recommendation indicating an action to be performed to avoid the failure, and when the action is to be performed; and output at least the recommendation via a user interface to an operator.

In an embodiment, the apparatus comprises at least one processor; and at least one memory including computer program code, the at least one memory and computer program code configured to, with the at least one processor, cause the apparatus at least to: obtain historical data comprising data measured on a plurality of rotating equipments in different uses; classify the historical data to a plurality of operating groups; determine at least a first group of key performance indicators; train, per an operating group, using historical data of said operating group, a model for predicting evolvement of values of the first group of the key performance indicators; and store the plurality of models trained with information on corresponding operating groups.

In the illustrated example of Figure 10, the apparatus 1000 comprises one or more interface (IF) entities 1001, and one or more processing entities 1002 connected to various interface entities 1001 and to one or more memories 1003.

The one or more interface entities 1001 are entities for receiving and transmitting information, such as communication interfaces comprising hardware and/or software for realising communication connectivity according to one or more communication protocols, or for realising data storing and fetching (obtaining) as described above in the explanation of the example illustrated by Figures 1 to 9, or for providing user interaction via one or more user interfaces as described above in the explanation of the example illustrated by Figures 1 to 7.

A processing entity 1002 is capable to perform calculations and configured to implement at least part of functionalities/operations described above, for example by means of any of Figures 1 to 9 and any combination thereof, with corresponding algorithms 1004 stored in the memory 1003. The functionalities and corresponding algorithms may include functionalities and corresponding algorithms for one or more recommendation generating procedures, including forecasting (predicting) and may include functionalities for processing obtained measurement data for example to key performance indicator values. The functionalities and corresponding algorithms may include functionalities and corresponding algorithms for training and/or retraining models outputting predictions, as described above. The functionalities and corresponding algorithms may include functionalities and corresponding algorithms for determining groups of key performance indicators. The entity 1002 may include one or more processors, controllers, control units, micro-controllers, etc. configurable to carry out embodiments/examples/implementations or operations described above, for example by means of any of Figures 1 to 9 and any combination thereof. Generally, a processor is a central processing unit, but the processor entity 1002 may be an additional operation processor or a multicore processor or a microprocessor.

A memory 1003 is usable for storing a computer program code required for one or more functionalities/operations described above, for example by means of any of Figures 1 to 9 and any combination thereof, that is, the algorithms 1004 for implementing the functionality/operations described above by means of any of Figures 1 to 9 and any combination thereof. The memory 1003 may be used for storing one or more models for generating predictions, and/or time series data and/or information on operating group(s). The memory 1003 may also be usable for storing, at least temporarily, other possible information required for one or more functionalities/operations described above, for example by means of any of Figures 1 to 9 and any combination thereof. The memory 1003 may comprise a data buffer that may, at least temporarily, store for example measurement data and/or time series data to be input and/or output predictions.

As a summary, the methods described herein, for example by means of any of Figures 1 to 9 and any combination thereof, may be configured as a computer or a processor, or a microprocessor, such as a single-chip computer element, or as a chipset, or one or more logic gates including at least a memory for providing storage area used for arithmetic operation and an operation processor for executing the arithmetic operation. Each or some or one of the algorithms for functions/operations described above, for example by means of any of Figures 1 to 7 and any combination thereof, may be comprised in one or more computer processors, application-specific integrated circuits (ASIC), digital signal processors (DSP), digital signal processing devices (DSPD), programmable logic devices (PLD), field-programmable gate arrays (FPGA), graphics processing units (GPU) and/or other hardware components that have been programmed and/or will be programmed by downloading computer program code (one or more algorithms) in such a way to carry out one or more functions of one or more embodiments/examples.

An embodiment provides a computer program embodied on any client-readable distribution/data storage medium or memory unit(s) or article(s) of manufacture, comprising program instructions executable by one or more processors/computers, which instructions, when loaded into an apparatus (device, equipment), constitute an entity providing corresponding functionality, or at least part of the corresponding functionality. Programs, also called program products, including software routines, program snippets constituting "program libraries", applets, and macros, can be stored in any medium, including non-transitory computer readable storage medium, and may be downloaded into an apparatus. In other words, each or some or one of the algorithms for one or more functions/operations described above, for example by means of any of Figures 1 to 9 one or more arithmetic logic units, a number of special registers and control circuits.

It will be obvious to a person skilled in the art that, as the technology advances, the inventive concept can be implemented in various ways within the scope of the claims. The invention and its embodiments are not limited to the examples described above but may vary within the scope of the claims.

## Claims

1. A computer implemented method comprising:
obtaining at certain intervals measurement data measured from a rotating equipment;
determining values for at least a first group of key performance indicators using at least a piece of said measurement data;
inputting, at least when a first change in any of the values in the first group is detected based on measurement data obtained at time t, the first change being a predetermined change indicating a start of a fault in the rotating equipment, the piece of said measurement data at time t, and at least corresponding pieces of measurement data obtained N times preceding the time t, wherein N is a positive integer, to a model trained for predicting the evolvement of values of the first group of key performance indicators in an operating group the rotating equipment belongs to, the model outputting predicted values for the first group of the key performance indicators;
estimating a duration how long it will take until the fault evolves to a failure based on the predicted values and thresholds predefined for the key performance indicators in the first group for the fault;
generating, based on the duration and a value of at least one operating parameter of the rotating equipment, a recommendation indicating an action to be performed to avoid the failure, and when the action is to be performed; and
outputting at least the recommendation via a user interface to an operator.

2. The computer implemented method of claim 1, wherein a speed and a torque of the rotating equipment defines the operating group of the rotating equipment amongst a plurality of operating groups, the operating groups having different speed and torque characteristics.

3. The computer implemented method of claim 1 or 2, wherein the at least one operating parameter comprises a number of starts of the rotating equipment within a given time period.

4. The computer implemented method of any of claims 1 to 3, wherein there are a plurality of groups of key performance indicators for a plurality of faults, respectively.

5. The computer implemented method of claim 4, wherein at least one key performance indicator belongs to two or more groups.

6. The computer implemented method of any preceding claim, further comprising:
detecting the first change when the at least one value increases over a predetermined threshold; and
starting the estimating the duration when at least one of the predicted values is decreasing.

7. The computer implemented method of any preceding claim, further comprising:
generating, when the first change is detected, a notification indicating a failure start and when to check the rotating equipment; and
outputting the notification via the user interface to the operator.

8. The computer implemented method of any preceding claim, wherein the first group of key performance indicators comprises one or more of relevant harmonics of vibration, a bearing index, a misalignment index, an unbalance index, a looseness index, a vibration a vibration root mean square, a vibration peak-to-peak, or a bearing fault index.

9. The computer implemented method of any preceding claim, wherein the fault is a bearing fault or a rotor bar fault.

10. A computer implemented method comprising:
obtaining historical data comprising data measured on a plurality of rotating equipments in different uses;
classifying the historical data to a plurality of operating groups;
determining at least a first group of key performance indicators;
training, per an operating group, using historical data of said operating group, a model for predicting evolvement of values of the first group of the key performance indicators; and
storing the plurality of models trained with information on corresponding operating groups.

11. The computer implemented method of claim 10, wherein the determining at least the first group of key performance indicators comprises:
obtaining historical key performance indicator data associated with status data indicating corresponding condition of a corresponding rotating equipment from a plurality of rotating equipments that have encountered at least one fault;
performing, per a fault, following:
selecting rotating equipments that have encountered the fault;
determining, per a rotating equipment, using key performance indicator values and corresponding status data, one or more affected key performance indicators, an affected key performance indicator being a key performance indicator whose values change when the condition of the rotating equipment changes from healthy to faulty;
applying statistical analysis to affected key performance indicators to determine a group of key performance indicators for said fault; and
storing the group of key performance indicators for said fault.

12. An apparatus comprising means for implementing a method according to any of claims 1 to 9.

13. An apparatus comprising means for implementing a method according to claim 10 or 11.

14. A computer program comprising instructions which, when the program is executed by a computing device, cause the computing device to carry out any of the methods of claims 1 to 9, or to carry out the method of claim 10 or 11.

15. A computer readable medium comprising program instructions which, when the program is executed by a computing device, cause the computing device to carry out any of the methods of claims 1 to 9, or to carry out the method of claim 10 or 11.
